# EUROPÄISCHE PATENTSCHRIFT

(11) **EP 0 848 978 B1**
(45) Veröffentlichungstag und Bekanntmachung des Hinweises auf die Patenterteilung: **29.09.1999**
(21) Anmeldenummer: 97122004.1
(22) Anmeldetag: 13.12.1997
(51) Int. Cl.: B01D 35/153, B01D 35/31, B01D 35/16, B01D 35/147, B01D 29/21, B01D 29/96

(54) **Rohrzarge zur Aufnahme eines Ringfilterelementes**
Supporting tube for incorporating a ring filter element
Tube support destiné à recevoir un élément filtrant annulaire

(30) Priorität: 18.12.1996 DE 19652603
(43) Veröffentlichungstag der Anmeldung: 24.06.1998
(73) Patentinhaber: KNECHT FILTERWERKE GMBH, 70376 Stuttgart (DE)
(72) Erfinder: Möhle, Rolf, 74626 Bretzfeld (DE); Sarwar, Abdul-Bashir, 70376 Stuttgart (DE)
(74) Vertreter: Patentanwalts-Partnerschaft Rotermund + Pfusch

(56) Entgegenhaltungen:
- DE-A- 19 623 681
- US-A- 4 094 791
- US-A- 4 133 763
- US-A- 5 516 425

## Beschreibung

Die Erfindung betrifft eine Rohrzarge zur Aufnahme eines radial außen aufschiebbaren, von radial außen nach innen durchströmten Ringfilterelementes mit den Merkmalen des Oberbegriffs des Patentanspruchs 1.

Eine solche Rohrzarge ist in der am 19.12.96 veröffentlichten deutschen Patentanmeldung 196 23 681 beschrieben.

Mit einer derartigen Rohrzarge das reinseitige Auslaufen eines Flüssigkeitsfilters zu vermeiden, ist das technische Problem, mit dem sich die Erfindung beschäftigt und das sie mit einer Ausführung der gattungsgemäßen Rohrzarge mit den kennzeichnenden Merkmalen des Patentanspruchs 1 löst.

Zweckmäßige Ausgestaltungen der Erfindung sind Gegenstand der Unteransprüche.

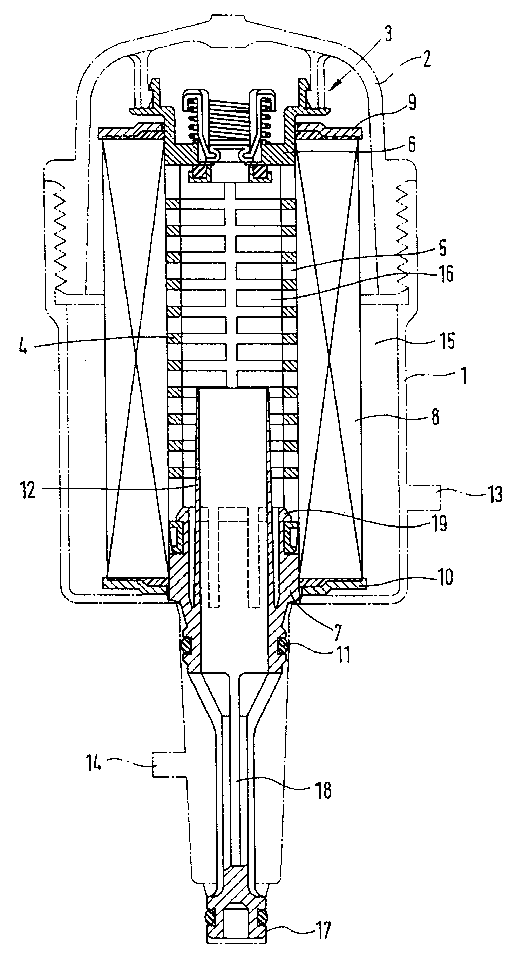

Filter mit Ringfilterelementen, bei denen an dem radial innen gelegenen reinseitigen Auslaufende ein vollständiges Auslaufen vermeidende Auslaufstutzen vorgesehen sind, sind 4,094,791 und US 4,133,763. Bei keinem dieser Filter sind die ein vollständiges Auslaufen vermeidenden Stutzen integrierter Bestandteil einer von einem Filterelement getrennten, bei einem Filterelementetausch in dem Filter verbleibenden Rohrzarge. Soweit die Auslaufstutzen bei den bekannten Filtern jeweils einen radialen Abstand gegenüber den Rohrzargen der Filterelemente aufweisen, dient dieser Abstand dazu, in dem Bereich, in dem der Auslaufstutzen innerhalb des Filterelementes liegt, ein Abführen des dort radial durch das Filterelement hindurchtretenden Filtrates in den Ablauf des Filterelementes möglichst ungehindert zu erlauben. Ist ein solcher Ablauf durch andere Maßnahmen gewährleistet, kann, wie bei dem Filter nach Fig. 1 in US 5,516,425 ein solcher radialer Abstand zwischen Rohrzarge und Auslauf auch fehlen. Der Ablauf erfolgt dort teilweise über einen axialen Umlenkungsbereich.

Ein Ausführungsbeispiel der Erfindung ist in der Zeichnung dargestellt.
Diese zeigt eine Rohrzarge im Längsschnitt mit einem aufgesetzten Ringfilterelement in einem in ein - angedeutet dargestelltes - Filtergehäuse eingebauten Zustand.

Bei dem dargestellten Filter handelt es sich um ein Schmierölfilter für einen Kraftfahrzeug-Verbrennungsmotor.

Das Filtergehäuse besteht aus einem in Einbaulage lotrecht unten liegenden Gehäusetopf 1 und einem diesen Gehäusetopf 1 lotrecht oben verschließenden Schraubdeckel 2.

Über einen Schnappverschluß 3 ist eine Rohrzarge 4 axial fixiert, drehbar mit dem Schraubdeckel 2 verbunden.

Die Rohrzarge 4 ist in einem radialen Durchströmbereich 5 radial durchlässig. Der radiale Durchströmbereich 5 ist axial jeweils über radial geschlossene Ringbereiche begrenzt, von denen ein erster radial geschlossener Bereich 6 dem geschlossenen Ende des Schraubdeckels 2 benachbart und ein zweiter radial geschlossener Bereich 7 dem Boden des Gehäusetopfes 1 benachbart ist.

Auf die Rohrzarge 4 ist ein Ringfilterelement 8 radial außen aufgeschoben, das mit an dessen Stirnseite vorgesehenen Endscheiben 9 und 10 radial dicht an dem ersten bzw. zweiten radial geschlossenen Bereich 6 bzw. 7 der Rohrzarge 4 anliegt.

Die Rohrzarge 4 schließt in dem zweiten radial geschlossenen Bereich 7 radial außen dicht an einen im Boden des Gehäusetopfes 1 vorgesehenen verengten Wandbereich des Gehäusetopfes 1 an. Die Dichtung wird hier durch eine Ringdichtung 11 erzeugt.

Im ersten radial geschlossenen Bereich 6 der Rohrzarge 4 ist die Rohrzarge axial verschlossen.

Im zweiten radial geschlossenen Bereich 7 ist die Rohrzarge 4 dagegen axial innen offen.

Von dem zweiten radial geschlossenen Bereich 7 der Rohrzarge 4 ist ein sich in Richtung des ersten radial geschlossenen Bereiches 6 erstreckendes Staurohr 12 angeformt. Dieses Staurohr 12 besitzt radialen Abstand gegenüber der Rohrzarge 4 in deren zwischen erstem und zweitem radial geschlossenen Bereich 6 bzw. 7 liegendem Abschnitt.

In dem Gehäusetopf 1 sind ein Einlaßstutzen 13 sowie ein Auslaßstutzen 14 vorgesehen.

Zu filterndes Schmieröl wird dem Filter durch den Einlaßstutzen 13 zugeführt, von dem aus es über den Rohraum 15 des Filters das Ringfilterelement 8 von radial außen nach radial innen durchströmt.

Innerhalb des Ringfilters 8 befindet sich der Reinraum 16 des Filters. Roh- und Reinraum 15 bzw. 16 des Filters sind voneinander durch das Ringfilterelement 8 sowie die geschlossenen Bereiche der Rohrzarge 4 voneinander getrennt, wobei die Rohrzarge 4 gegenüber dem Gehäusetopf 1 durch die Ringdichtung 11 gedichtet ist.

Aus dem Reinraum 16 strömt das gefilterte Schmieröl über das Staurohr 12 durch den zweiten radial geschlossenen Bereich 7 der Rohrzarge 4 hindurch zu dem Auslaßstutzen 14, durch den es das Filter verläßt.

An der tiefsten Stelle des Bodens des Gehäusetopfes 1 ist eine Ablaßöffnung 17 vorgesehen. Diese Öffnung ist bei geschlossenem Schraubdeckel 2 durch einen von dem zweiten radial geschlossenen Bereich 7 der Rohrzarge 4 aus axial herausragenden Stift 18 verschlossen. Der Stift 18 ist derart an dem zweiten radial geschlossenen Bereich 7 angeformt, daß ein axialer Durchfluß durch den zweiten radial geschlossenen Bereich 7 nicht behindert wird.

Bei einem Öffnen des Schraubdeckels 2 wird in an sich bekannter Weise die Öffnung 17 für einen Abfluß von Schmieröl durch automatisches Herausziehen des Stiftes 18 aus dieser Öffnung freigegeben. Die Rohrzarge 4 besteht in Längsrichtung aus zwei Abschnitten, die im Bereich des zweiten radial geschlossenen Bereiches 7 durch einen Schnappverschluß miteinander verbunden sind.

Die Schnappverschlußmittel bestehen aus an dem zweiten radial geschlossenen Bereich 7 axial in Richtung des offenen Endes des Gehäusetopfes 1 angeformten radial federnden Zungen 19 mit radial nach außen abstehenden Widerhaken an deren freien Enden. Mit diesen Widerhaken greifen die Zungen 19 in einen Ring der Rohrzarge 4 ein, wenn der Schnappverschluß geschlossen ist.

## Patentansprüche

1. Rohrzarge (4) zur Aufnahme eines radial außen aufschiebbaren, von radial außen nach innen durchströmbaren Ringfilterelementes (8) mit den Merkmalen
- die Rohrzarge (4) ist in einem radialen Durchströmbereich (5) mit einer vorgegebenen axialen Länge radial durchlässig,
- der radial durchlässige Bereich der Rohrzarge (4) grenzt an seinen axialen Enden an einen ersten und einen zweiten radial geschlossenen Bereich (6) bzw. (7) an,
- der zweite radial geschlossene Rohrzargenbereich (7) ist axial innen offen ausgebildet,
- mit dem zweiten radial geschlossenen Rohrzargenbereich (7) ist die Rohrzarge (4) radial dicht in einen umfangsmäßig geschlossenen Kanal einschiebbar,
- vom zweiten radial geschlossenen Bereich (7) der Rohrzarge (4) ragt ein die axiale Rohrzargenöffnung nicht versperrender Stift (18) als axiales Ende der Rohrzarge (4) ab,
**dadurch gekennzeichnet,**
daß von dem zweiten radial geschlossenen Bereich (7) der Rohrzarge (4) in den radialen Durchströmbereich (5) der Rohrzarge (4) ein umfangsmäßig geschlossenes Staurohr (12) mit radialem Abstand gegenüber der Rohrzarge (4) abragt.

2. Rohrzarge nach Anspruch 1,
**dadurch gekennzeichnet,**
daß die aus dem zweiten radial geschlossenen Rohrzargenbereich (7) axial herausragende Länge des Staurohres (12) größer als der Innendurchmesser dieser Rohrzarge (4) ist.

3. Rohrzarge mit in axialer Richtung auf der Höhe des zweiten radial geschlossenen Bereiches (7) über einen Schnappverschluß miteinander verbundenen Abschnitten, wobei an dem zweiten radial geschlossenen Bereich (7) radial federnde Schnappverschlußmittel (19) vorgesehen sind, nach Anspruch 1 oder 2,
**dadurch gekennzeichnet,**
daß die federnden Schnappverschlußmittel radial mit Abstand außerhalb des Staurohres (12) liegen.

## Claims

1. Supporting tube (4) which is intended for accommodating a ring filter element (8), which can be pushed on radially on the outside and can have flow passing through it radially from the outside to the inside, and has the following features
- the supporting tube (4) is radially permeable in a radial throughflow region (5) of a predetermined axial length,
- the radially permeable region of the supporting tube (4) is adjacent, at its axial ends, to a first radially closed region (6) and a second radially closed region (7),
- the second radially closed supporting-tube region (7) is designed to be open axially on the inside,
- by means of the second radially closed supporting-tube region (7), the supporting tube (4) can be pushed in a radially sealed manner into a circumferentially closed channel,
- from the second radially closed region (7) of the supporting tube (4) there projects, as an axial end of the supporting tube (4), a pin (18), which does not block the axial supporting-tube opening,
characterized in that a circumferentially closed reservoir tube (12) projects from the second radially closed region (7) of the supporting tube (4) into the radial throughflow region (5) of the supporting tube (4), at a radial distance from said supporting tube (4).

2. Supporting tube according to Claim 1, characterized in that that length of the reservoir tube (12) which projects axially from the second radially closed supporting-tube region (7) is greater than the internal diameter of said supporting tube (4).

3. Supporting tube having sections which are connected to one another in the axial direction level with the second radially closed region (7) via a snap-action closure, radially resilient snap-action-closure means (19) being provided on the second radially closed region (7), according to Claim 1 or 2, characterized in that the resilient snap-action-closure means are located outside the reservoir tube (12), at a radial distance therefrom.

## Revendications

1. Support tubulaire (4) pour un élément filtrant annulaire (8) qui peut être glissé extérieurement radialement sur celui-ci et être traversé de l'extérieur radialement vers l'intérieur, ayant les caractéristiques suivantes :
- ce support tubulaire (10) est perméable radialement dans une zone radiale de traversée (5) ayant une longueur axiale fixée,
- la zone perméable radialement du support tubulaire (4) est contiguë à ses extrémités axiales à une première et une deuxième zones fermées radialement (6, 7),
- la deuxième zone fermée radialement (7) du support tubulaire est ouverte intérieurement axialement,
- le support tubulaire (4) peut être engagé de manière étanche radialement par sa deuxième zone fermée radiale-ment (7) dans un conduit fermé périphériquement,
- de la deuxième zone fermée radialement (7) du support tubulaire (4) fait saillie, comme extrémité axiale de celui-ci, une tige (18) qui ne bouche pas l'orifice axial de celui-ci,
caractérisé par le fait que de la deuxième zone fermée radialement (7) du support tubulaire (4) fait saillie dans la zone radiale de traversée (5) de celui-ci un tube de Pitot fermé périphériquement (12) qui est écarté radialement du support tubulaire (4).

2. Support tubulaire selon la revendication 1, caractérisé par le fait que la longueur du tube de Pitot (12) qui dépasse axialement de la deuxième zone fermée radialement (7) du corps tubulaire (4) est supérieure au diamètre intérieur de ce support tubulaire (4).

3. Support tubulaire ayant des parties jointes dans la direction axiale à la hauteur de la deuxième zone fermée radialement (7) par un encliquetage, sur la deuxième zone fermée radialement (7) étant prévus des moyens d'encliquetage faisant ressort radialement (19), selon l'une des revendications 1 et 2, caractérisé par le fait que les moyens d'encliquetage à ressort sont situés à distance radialement à l'extérieur du tube de Pitot (12).
